# EUROPÄISCHE PATENTANMELDUNG

(11) **EP 0 836 988 A1**
(43) Veröffentlichungstag der Anmeldung: **22.04.1998**
(21) Anmeldenummer: 97117958.5
(22) Anmeldetag: 16.10.1997
(51) Int. Cl.: B64C 3/48

(54) **Auftriebskörper mit veränderbarer Wölbung**

(30) Priorität: 19.10.1996 DE 19643222
(71) Anmelder: DAIMLER-BENZ AKTIENGESELLSCHAFT, 70567 Stuttgart (DE)
(72) Erfinder: Müller, Dietmar, Dipl.-Ing., 64354 Reinheim (DE)

(57) **Zusammenfassung**

Auftriebskörper mit veränderbarer Wölbung, mit einem strömungsgünstigen Profil, mit einer zumindest bereichsweise elastisch verformbaren Struktur sowie mit einer integrierten Verstelleinrichtung, umfassend einen oder mehrere formsteife, um eine Achse drehbare, mit der zu verformenden Strukturhaut in Wirkverbindung stehende Verstellkörper (7).

Jeder Verstellkörper weist eine gekrümmte Kegelform auf, deren örtlicher Querschnitt der örtlichen Profildicke entspricht.

Jeder Verstellkörper steht mit der Strukturhaut unmittelbar und/oder über mindestens eine Gleitschicht mittelbar in Berührung.

## Beschreibung

Die Erfindung betrifft einen Auftriebskörper mit veränderbarer Wölbung, gemäß dem Oberbegriff des Patentanspruches 1.

Um den Auftrieb und den Strömungswiderstand eines umströmten Körpers an verschiedene Umgebungsbedingungen anzupassen und zu optimieren, sind verschiedene Anordnungen und Verfahren bekannt. Bei Verkehrsflugzeugen wird die Profilwölbung beispielsweise durch kinematisches Verschieben oder Verdrehen von separaten Klappen des Tragflügels verändert. Dabei treten Spalten und Hohlräume in der Außenhaut der Tragflügel auf. Der Flügelkörper selbst verändert dabei seine Form nicht.

Aus der US-A-3,109,613 ist eine Anordnung bekannt, mit der aerodynamische Eigenschaften, speziell von Auftriebsflächen von Flugzeugen, durch eine Veränderung der Profilform bzw. der Wölbung beeinflußt werden können. Die Veränderung der Profilform wird mit Hilfe einer mehrgliedrigen, kurbelwellenartigen Struktur im Innern des Tragflügels bewirkt, wobei über verschiedene Lager eine vertikale Verschiebung von Stegen im Innern des Tragflügels erfolgt. Die Stege sind mittels einer klavierbandähnlichen Lagerung gelenkig mit der saug- bzw. druckseitigen Haut des Tragflügels verbunden. Durch ein Drehen der Welle wird die Profilform stückweise verbogen, womit eine quasi-kontinuierliche Verformung der Tragflügelstruktur erzielt wird.

Die beschriebenen Verfahren und Vorrichtungen haben den Nachteil, daß die Gelenkstrukturen baulich sehr aufwendig sind und hohe Aktorkräfte zur Bewegung der Strukturen realisiert werden müssen, um eine ausreichende Wölbungsänderung zu ermöglichen. Desweiteren ist die in der US-A-3,109,613 beschriebene Anordnung mechanisch aufwendig zu verwirklichen. Eine hohe Steifigkeit ist mit dieser Anordnung nur durch einen hohen Gewichtszuwachs zu realisieren.

Demgegenüber besteht die Aufgabe der Erfindung darin, die Umströmungseigenschaften eines Auftriebskörpers durch kontinuierliche Verformung mittels einer leichten, steifen und reibungsarmen Verstelleinrichtung zu verbessern.

Diese Aufgabe wird durch die im Hauptanspruch gekennzeichneten Merkmale gelöst. Vorteilhafte Ausgestaltungen sind den Unteransprüchen zu entnehmen.

Die Erfindung geht davon aus, mittels einer integrierten Verstelleinrichtung in einem Auftriebskörper eine variable und kontinuierliche Wölbungsänderung mit einer glatten, stetigen Profilkontur ohne Knicke zu realisieren. Die Verstelleinrichtung weist mindestens einen im wesentlichen eingliedrigen Verstellkörper auf. Vorzugsweise sind mehrere Verstellkörper parallel zueinander angeordnet. Eine Krümmungsänderung der Oberseite wie auch der Un-terseite des Profils entlang der Profilsehne in negativer (Entwölbung) sowie in positiver Richtung (Zuwölbung) zwischen einem festen Holm und der Flügelendkante oder auch der Vorderkante wird durch diese integrierte Verstelleinrichtung ermöglicht. Ein besonderer Vorteil ist, daß auch eine spannweitig differenzierte Verstellung für die Zuwölbung bzw. Entwölbung realisiert werden kann.

Das bislang bestehende Problem, die Kontur z.B. eines Flugzeugflügels, der in der bekannten starren Rippenbauweise ausgeführt ist, einem Strömungsprofil anzupassen, wird mit der erfindungsgemäßen Anordnung gelöst, ohne daß Knicke, Sprünge oder Spalten im Profil der Außenhaut auftreten. Die Strömungseigenschaften des Auftriebskörpers sind damit erheblich verbessert.

Ein weiterer Vorteil der Erfindung ist, daß das Flächenträgheitsmoment der erfindungsgemäßen Anordnung wesentlich größer ist als das Flächenträgheitsmoment von aus dem Stand der Technik bekannten Anordnungen. Es können hohe Steifigkeitsanforderungen erfüllt werden, ohne einen großen Gewichtszuwachs tolerieren zu müssen. Besonders günstig ist, daß wegen des großen Flächenträgheitsmoments der Verstellkörper nicht aus massivem Material, insbesondere aus Metall, ausgeführt werden muß, sondern Hohlkörper und bevorzugt Leichtbaumaterialien verwendet werden können, besonders bevorzugt Faserverbundwerkstoffe. Dadurch bleibt die Gewichtszunahme eines Tragflügels, der mit der erfindungsgemäßen Verstelleinrichtung ausgestattet ist, gering.

Die kontinuierliche Wölbungsänderung ohne Knicke in der Außenhaut ist besonders materialschonend und beugt einer vorzeitigen Materialermüdung vor. Die druckseitige oder die saugseitige Haut wird mit dem starren Vorderteil bevorzugt durch Verschraubenm verbunden. Die andere Hautseite wird nicht gelagert oder kann mit einem Linearlager versehen werden. Dies gibt der Hautstruktur eine materialschonende Flexibilität, und die Verformungskräfte sind gering.

Die Lagerung des Verstellkörpers, insbesondere im starten Vorderteil des Auftriebskörpers, erlaubt eine Veränderung der Wölbung des Auftriebskörpers auch bei aerodynamischer Belastung.

Vorteilhaft ist, die Drehung des Verstellkörpers mit einem Linearantrieb zu bewirken, der punktuell am Verstellkörper angreift. Der Momentverlauf für den Verstellkörper führt auch unter aerodynamischer Last dazu, daß der Aktor trotz sich ändernder Winkellagen immer etwa ungefähr dieselbe Zugkraft aufbringen muß, die zudem wegen des Übersetzungsverhältnisses der Anordnung relativ gering ist.

Besonders günstig ist, daß der Auftriebskörper einfach und wartungsfreundlich gebaut werden kann. Die Außenhaut kann einfach abgenommen werden, und die Verstelleinrichtung ist frei zugänglich.

Im folgenden wird die Erfindung anhand der Figuren noch näher beschrieben. Es zeigen:
- Fig. 1: einen Querschnitt durch einen Auftriebskörper in mehreren Wölbungszuständen,
- Fig. 2: einen vergleichbaren Schnitt im Bereich eines Verstellkörpers,
- Fig. 3: eine Ansicht des geöffneten Gesamtsystems von oben,
- Fig. 4: eine Ansicht der Stellkinematik mit Linearaktor,
- Fig. 5: einen vergrößerten Teilschnitt entsprechend Fig. 1 mit einem unverformten und einem verformten Zustand des Auftriebskörpers,
- Fig. 6: eine perspektivische Ansicht eines hohlen Verstellkörpers,
- Fig. 7: zwei Längsschnitte durch einen Auftriebskörper im Bereich der Aktoren.

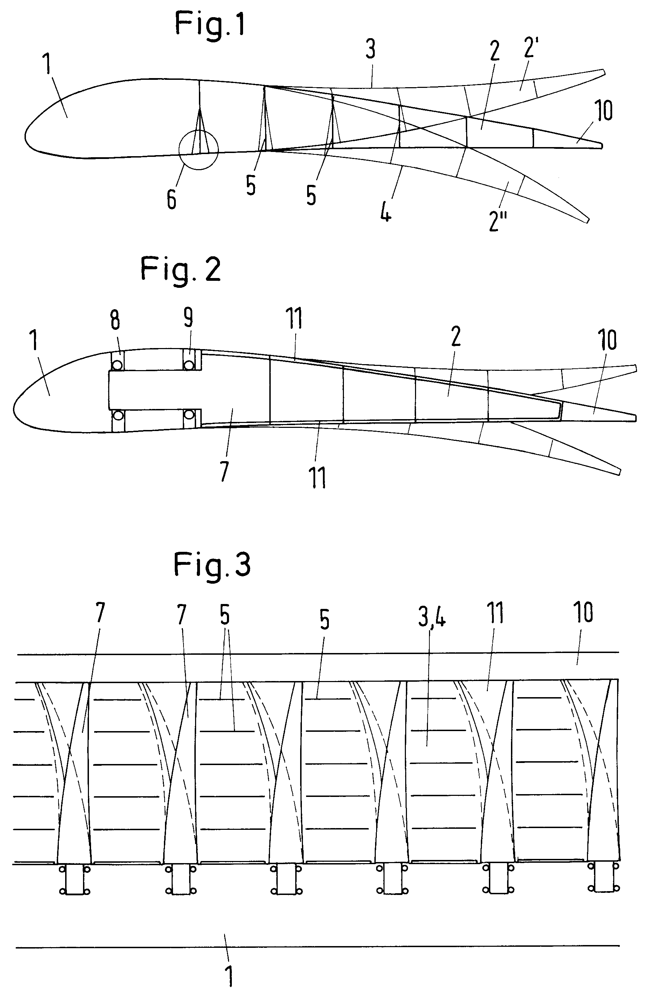

Fig. 1 zeigt einen Schnitt durch einen Auftriebskörper, z.B. einen Tragflügel, mit einem starren Vorderteil 1 und einem flexiblen hinteren Bereich mit einem Endkantenformteil 10. Der Auftriebskörper ist mit einer zumindest in den vorgegebenen Bewegungsbereichen flexiblen Außenhaut, insbesondere Faserverbundmaterial, umgeben, wobei die obere Haut 3 die Saugseite und die untere Haut 4 die Druckseite des Auftriebskörpers darstellt. Im Innern sind die Saugseite und Druckseite des flexiblen hinteren Bereiches mit einer Anzahl von parallel zueinander verlaufenden Stegen 5 verbunden, die bevorzugt parallel zur Längsausdehnung des Auftriebskörpers angeordnet sind. In der Neutralstellung der Verstelleinrichtung nimmt die Außenhaut eine Profilform 2 an. Die maximalen Auslenkungen dieser Profilform sind durch die Positionen 2' bzw. 2'' gekennzeichnet.

Zwischen den Stegen 5 ist die Verstelleinrichtung angeordnet, die in der gezeigten Schnittebene nicht zu sehen ist. Die Stege 5 sind spannweitig in den Bewegungsbereichen des Verstellkörpers 7 ausgespart.

Die Stege sind bevorzugt flexibel und aus einem Faserverbundmaterial gebildet, insbesondere aus Aramidfaserverbundmaterial und/oder Glasfaserverbundmaterial und/oder Kohlefaserverbundmaterial.

Die Außenhaut ist an der Saugseite oder, wie dargestellt, an der Druckseite unterbrochen. Die unterbrochene Seite der Außenhaut ist freibeweglich oder, wie dargestellt über ein Linearlager 6 mit dem starren Vorderteil 1 des Auftriebskörpers verbunden. Damit ist die notwendige Flexibilität der Außenhaut auch bei starker Verwölbung gewährleistet. Durch die beschriebene Anordnung des Linearlagers wird erreicht, daß die Verschiebung der Außenhaut 4 auf der Druckseite gegenüber der saugseitigen Haut 3 an dem starren Vorderteil 1 am größten ist. Da dort auch die innen angeordneten Stege 5 am längsten sind, bleiben deren Randfaserdehnungen im zulässigen, reversiblen Bereich.

Fig. 2 zeigt den Schnitt durch die Verstelleinrichtung, die in den flexiblen Bereich des Auftriebskörpers integriert ist. Die Verstelleinrichtung weist mindestens einen im wesentlichen starren, kegelförmig gekrümmten Verstellkörper 7 auf, der an einem oder mehreren Holmstegen 8, 9 im starren Vorderteil 1 des Auftriebskörpers drehbar gelagert ist. Der Verstellkörper 7 liegt zumindest abschnittsweise entlang seiner Längsausdehnung mittelbar an der Innenseite der Außenhaut 3 und/oder 4 an. Eine Drehung des gekrümmten Verstellkörpers 7 bewirkt, daß sich die flexible Außenhaut im Bereich des Verstellkörpers 7 verformt. Die Profilform der Außenhaut 3, 4 paßt sich dem glatten, stetigen Profil des Verstellkörpers 7 an. Die Verformung ist sowohl als Zuwölbung als auch als Entwölbung möglich.

Es ist in der beschriebenen Anordnung nicht kreisförmig sondern weicht zum Teil stark von der Kreisform ab. Durch die Relativbewegung von Verstellkörper zu Hautstruktur wird der vertikale Bauraum zu den Extremstellungen hin eingeschränkt.

Die Stärke der erreichbaren Wölbung hängt von der Stärke der Krümmung des Verstellkörpers 7 ab. Die Kontaktfläche zwischen Außenhaut 3, 4 und Verstellkörper 7 ist vorzugsweise mit einer Gleitschicht 11 versehen, die auf der Verstellkörperoberfläche und/oder auf der Innenseite der Außenhaut angeordnet ist. Die Gleitschicht besteht vorzugsweise aus einem Kunststoff wie Teflon und/oder einem Feststoffschmiermittel und/oder einer Metallschicht. Damit wird eine Rotations- und/oder Gleitbewegung des Verstellkörpers 7 auf der Innenseite der Außenhaut 3, 4 nicht nur im unbelasteten Zustand, sondern auch bei aerodyamischer Belastung erleichtert. Die Gleitschicht 11 ermöglicht zudem eine linienförmige, gleichmäßige Kraftübertragung zwischen Außenhaut 3, 4 und Verstellkörper 7.

Bevorzugt weist die Verstelleinrichtung mehrere Verstellkörper 7 auf, die zueinander parallel angeordnet sind. In einer bevorzugten Ausführungsform ist der Verstellkörper 7 als Hohlkörper aus einem Faserverbundmaterial gebildet, insbesondere aus Kohlefaserverbundwerkstoff, Glasfaserverbundwerkstoff und/oder Aramidfaserverbundwerkstoff.

Besonders günstig ist die Anordnung des Lagers des Verstellkörpers 7 im starren Vorderteil 1 des Auftriebskörpers. Sie ermöglicht eine einfache und wartungsfreundliche Bauweise des Auftriebskörpers. Die Außenhaut ist vorzugsweise einfach am starren Vorderteil 1 angeschraubt und kann zu Wartungszwecken z.B. einfach durch Lösen der Verschraubung an der Saugseite nach hinten abgenommen werden.

Es ist sehr vorteilhaft, die Außenhaut ebenfalls aus Faserverbundwerkstoff zu fertigen.

Es kann auch vorteilhaft sein, die Saugseite der Hautstruktur an der Vorderkante frei beweglich zu gestalten. Der entstehende Spalt wird ggf. durch einen dort vorhandenen Spoiler abgedeckt.

Fig. 3 zeigt eine Draufsicht auf das geöffnete Gesamtsystem. Abgebildet ist der starre Vorderteil 1, in dem mehrere Verstellkörper 7 drehbar gelagert sind. Die spannweitig vorgesehenen Aussparungen der Stege 5 für den Schwenkbereich der Verstellkörper 7 sind zu erkennen.

Die Krümmung der Verstellkörper 7 bewirkt, daß eine Verdrehung dieser nicht nur einen vertikalen Hub, sondern auch eine horizontale Verschiebung bewirkt, so daß die Stege 5 zusätzlich in dem Schwenkbereich der Verstellkörper 7 ausgespart sein müssen.

Durch ein Verdrehen der Verstellkörper 7 wird der Außenhaut eine Form aufgezwungen, die auf der Mantelfläche des Verstellkörpers 7 der jeweiligen Begrenzungslinie eines vertikalen Schnittes entlang der Verstellkörpermittellinie entspricht. Es können also über den Drehwinkel der Verstellkörper 7 stufenlos Profilformen eingestellt werden, die eine Linearkombination aus der Extremstellung (max. Zu- bzw. Entwölbung) und der Neutralstellung darstellen.

Die Gesamtstruktur besteht aus
- einem biegefähigen Hautkörper mit saugseitiger Haut 3 auf der Oberseite und druckseitiger Haut 4 auf der Unterseite,
- einem oder mehreren in Richtung der y-Achse (Spannweitenrichtung) schubsteifen, aber in Richtung der x-Achse (Flugrichtung) biegeweichen Stegen 5, welche saugseitige Haut 3 und druckseitige Haut 4 miteinander verbinden,
- einem Linearlager 6, welches der druckseitigen Haut 4 eine lineare Verschiebung relativ zu dem Holmsteg 9 ermöglicht; die saugseitige Haut 3 ist fest mit dem Holmsteg 9 verbunden,
- einem festen Holm bzw. Holmsteg 8, 9,
- einem Endkantenformteil 10,
- einem oder mehreren hornförmigen Verstellkörpern 7, die an dem Holmsteg 8, 9 drehbar gelagert sind,
- einer Gleitschicht 11, mittels welcher die Innenseite der druckseitigen Haut 4 mit dem Verstellkörper 7 kontaktiert.

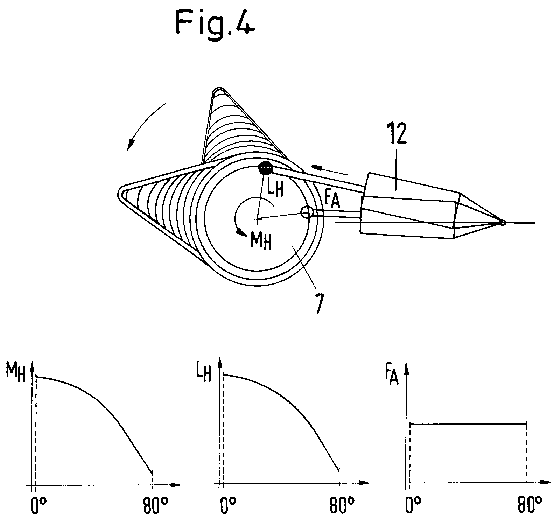

Die Drehbewegung des Verstellkörpers 7 wird vorteihaft mit einem Linearantrieb erzeugt. Dies ist in Fig. 4 dargestellt. Der zugehörige Linearaktor 12 ist radial am Verstellkörper 7 angelenkt und ist drehbar gelagert, so daß er während eines Stellzyklusses ein Schwenkbewegung vollführt. Die Anordnung des Linearaktors 12 und der durch die Konstruktion bedingte anfallende Momentenverlauf am Stumpf des Verstellkörpers unter aerodynamischer Last führt dazu, daß der Linearaktor 12, der die Drehbewegung verursacht, trotz unterschiedlicher Winkellagen immer etwa ungefähr dieselbe Zugkraft aufbringen muß. Die Zugkraft ist wegen der "natürlichen" Übersetzung der Verstelleinrichtung relativ gering. Fig. 4 zeigt die Bewegung des Linearaktors 12 bei der Rotation des Verstellkörpers 7 und eine Darstellung des dabei wirkenden Drehmoments M_{H} und Hebels L_{H} sowie der Zugkraft F_{A}.

Eine weitere vorteilhafte Ausführungsform wäre die Verwendung eines rotatorischen Antriebs zum Verdrehen des Verstellkörpers 7.

Durch eine individuelle Ansteuerung der einzelnen Verstellkörper 7 kann eine spannweitig differenzierte Wölbung realisiert werden. Die Ansteuerung kann mechanisch, elektrisch, pneumatisch und/oder hydraulisch erfolgen.

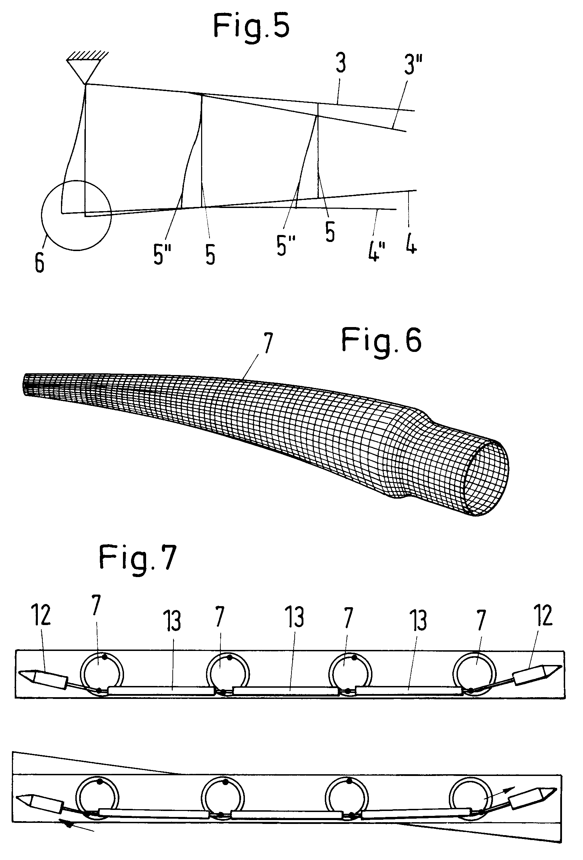

Fig. 5 verdeutlicht die bereits in Fig. 1 gezeigten Verformungsverhältnisse. Dabei sind ein unverformter und ein nach unten gewölbter Zustand (Bezugszeichen mit 2 Strichen indiziert) des Auftriebskörpers wiedergegeben. Man erkennt sowohl die Verformung der Stege 5 als auch die relativ starke Verformung bzw. Verschiebung im Bereich des Linearlagers 6.

Fig. 6 zeigt eine perspektivische Ansicht eines hohlen Verstellkörpers 7, wobei sowohl der hornartig gekrümmte Bereich als auch der verjüngte, zylindrische Lagerbereich zu erkennen sind.

Fig. 7 zeigt in zwei Schnitten einen Auftriebskörper, dessen Verstellkinematik eine spannweitig differenzierte Profilverwölbung ermöglichst. Zu diesem Zweck sind die Verstellkörper 7 (hier vier Stück als Beispiel) über elastische Stäbe 13 gekoppelt, so daß jeder Verstellkörper 7 einen anderen Verdrehwinkel aufweisen kann. Dabei genügen zwei Linearaktoren 12, welche gleich- und gegensinnig sowie um gleiche und verschiedene Wege, d.h. unabhängig voneinander, verstellbar sind.

Die untere Darstellung läßt erkennen, daß der Auftriebskörper links nach oben, rechts nach unten verwölbt ist, wobei die Linearaktoren 12 durch gegensinnige Verstellung alle elastischen Stäbe 13 unter Zug setzen und somit dehnen. Natürlich sind auch eine spannweitig differenzierte Verformung in die gleiche Richtung (nach unten oder oben) und eine über die Spannweite konstante Verformung möglich, wobei im letzten Fall die Elastizität der Stäbe 13 nicht zum Tragen kommt.

Somit ist mit geringem konstruktivem Aufwand eine Vielzahl von Formänderungen möglich.

Es sei nochmals ausdrücklich darauf hingewiesen, daß die Erfindung gleichermaßen für die Hinter- und die Vorderkante von Auftriebskörpern, z.B. Flugzeugtragflügeln, zu deren Verstellung geeignet ist.

Die Konstruktion ist einfach umzusetzen, da sie der bekannten Rippenbauweise ähnelt, so daß Erfahrungen aus diesem Bereich verwendet werden können.

Während die bisherigen Ausführungen sich auf Flügelprofile konzentrierten, ist die Erfindung nicht auf diese Anwendung beschränkt. Weitere Einsatzgebiete der Erfindung sind in solchen Bereichen zu finden, wo ein Profil Kontakt mit einem Strömungsmedium hat, z.B. Rumpfteile von Flugzeugen, Bootskörpern, Rotorblättern etc.. Der Begriff "Auftriebskörper" ist nicht so zu verstehen, daß nur vertikale Kräfte erzeugbar wären. Die Erfindung ist ebenso z.B. bei "Quertriebskörpern", wie Schiffsrudern, Seitenleitwerken etc., anwendbar.

## Patentansprüche

1. Auftriebskörper mit veränderbarer Wölbung, insbesondere Flugzeugtragflügel, mit einem strömungsgünstigen, zumindest zeitweise eine Auf- bzw. Quertriebskraft erzeugenden Profil, mit einer den vorderen und/oder den hinteren Profilbereich bildenden, elastisch verformbaren, großteils hohlen Struktur mit mehreren stegartigen Verbindungen zwischen saug- und druckseitiger Haut, sowie mit einer integrierten Verstelleinrichtung zur Änderung der Profilwölbung, umfassend einen oder mehrere formsteife, jeweils um eine definierte Achse drehbare, mit den zu verformenden Hautbereichen in mechanischer Wirkverbindung stehende Verstellkörper, **dadurch gekennzeichnet**,
daß jeder Verstellkörper (7) im Verformungsbereich der Auftriebskörperstruktur eine gekrümmte Kegelform aufweist, deren örtlicher Querschnitt etwas kleiner als die Profildicke an der jeweiligen Stelle ist, und
daß jeder Verstellkörper (7) zumindest bereichsweise durch Linienberührung mit der Haut (3, 4) des Auftriebskörpers unmittelbar und/oder über mindestens eine dünne, reibungsmindernde Schicht (11) mittelbar in Berührung steht.

2. Auftriebskörper nach Anspruch 1, **dadurch gekennzeichnet**, daß der Verstellkörper (7) zumindest bereichsweise sowohl Saugseite (Haut 3) als auch Druckseite (Haut 4) zumindest mittelbar berührt.

3. Auftriebskörper nach Anspruch 1 oder 2, **dadurch gekennzeichnet**, daß am starren Teil (1) des Auftriebskörpers ein Lager (Holmstege 8, 9) angeordnet ist, und daß der Verstellkörper (7) in diesem Lager (Holmstege 8, 9) drehbar gelagert ist.

4. Auftriebskörper nach einem oder mehreren der Ansprüche 1 bis 3, **dadurch gekennzeichnet**, daß der Verstellkörper (7) durch einen rotatorischen Antrieb oder einen Linearantrieb (Linearaktor 12) um eine Achse drehbar ist.

5. Auftriebskörper nach Anspruch 4, **dadurch gekennzeichnet**, daß der Linearaktor (12) radial außen am Verstellkörper (7) angelenkt ist.

6. Auftriebskörper nach einem oder mehreren der Ansprüche 1 bis 5, **dadurch gekennzeichnet**, daß zumindest eine Seite der Außenhaut (3, 4), im Übergangsbereich zum starren Teil (1) des Auftriebskörpers frei beweglich ist oder über mindestens ein Linearlager (6) mit dem starten Teil (1) des Auftriebskörpers verbunden ist.

7. Auftriebskörper nach einem oder mehreren der Ansprüche 1 bis 6, **dadurch gekennzeichnet**, daß der Verstellkörper (7) als Hohlkörper ausgebildet ist.

8. Auftriebskörper nach einem oder mehreren der Ansprüche 1 bis 7, **dadurch gekennzeichnet**, daß der Verstellkörper (7) Faserverbundmaterial aufweist, insbesondere Kohlefaserverbundmaterial, Glasfaserverbundmaterial und/oder Aramidfaserverbundmaterial.

9. Auftriebskörper nach einem oder mehreren der Ansprüche 1 bis 8, **dadurch gekennzeichnet**, daß die stegartigen Verbindungen parallel zur Längsausdehnung des Auftriebskörpers angeordnete, flexible Stege (5) sind und daß die Stege (5) Faserverbundmaterial aufweisen, insbesondere Kohlefaserverbundmaterial, Glasfaserverbundmaterial und/oder Aramidfaserverbundmaterial.

10. Auftriebskörper nach einem oder mehreren der Ansprüche 1 bis 9, **dadurch gekennzeichnet**, daß die Außenhaut (3, 4) vom Auftriebskörper zumindest bereichsweise, bevorzugt im beweglichen Bereich, abnehmbar ist.

11. Auftriebskörper nach einem oder mehreren der Ansprüche 1 bis 10, **dadurch gekennzeichnet**, daß er für Luft-, Land- und Wasserfahrzeuge verwendbar ist.

12. Auftriebskörper nach einem oder mehreren der Ansprüche 1 bis 10, mit drei oder mehr Verstellkörpern, **dadurch gekennzeichnet**, daß die Verstellkörper (7) über außerhalb ihrer Drehachsen angreifende, elastische Stäbe (13) kinematisch gekoppelt sind, und daß an jedem der beiden endseitigen Verstellkörper ein Linearaktor (12) angreift, wobei die beiden Linearaktoren (12) unabhängig voneinander verstellbar sind.
